# EUROPEAN PATENT APPLICATION

(11) **EP 1 104 115 A2**
(43) Date of publication of application: **30.05.2001**
(21) Application number: 00660216.3
(22) Date of filing: 28.11.2000
(51) Int. Cl.: H04B 1/38, H01Q 1/24, H04M 1/72

(54) **Coated cover for mobile station , battery and fixed antenna**

(30) Priority: 29.11.1999 FI 992548
(71) Applicant: NOKIA MOBILE PHONES LTD., 02150 Espoo (FI)
(72) Inventor: Oikarainen, Ari E., 00100 Helsinki (FI)
(74) Representative: Kupiainen, Juhani Kalervo

(57) **Abstract**

The invention relates to a coated structural element and to apparatus and parts of apparatus, advantageously a mobile station (1) with a fixed antenna (7, 8) and a cover part (2) which is electrically non-conductive, at least as regards the antenna area, and to a separate cover part (2), battery (6) and antenna (7) for such a mobile station. In accordance with the invention, the cover part (2) of the mobile station (1), the exterior surface (5) of the battery (6) and/or the antenna surface (3) outside the cover part are at least partly coated with a metallic-looking but yet electrically nonconductive substance, such as aluminium nitride, which can be applied using e.g. the PVD (Physical Vapor Deposition) method.

## Description

This invention relates to coated structural elements and to apparatus and parts of apparatus manufactured using said structural elements, said apparatus advantageously being a mobile station/mobile phone, in particular a mobile station with a fixed antenna and cover part which is non-conductive at least as regards the antenna area. In addition, this invention relates to a separate cover part, battery and fixed antenna of such a mobile station, which antenna, when installed, at least partly protrudes from said cover part.

Until now it has not been possible to coat the cover parts of currently sold mobile stations and their antennas with a metallic substance because the metallic substances in use, being electrically conductive, would substantially degrade the characteristics of the antennas of mobile stations. Therefore, the material used in the cover parts of mobile stations is mainly electrically non-conductive dyed plastics. However, some users view that a dyed plastic material gives a somewhat "cheap" impression as regards its appearance, considering that mobile stations are after all high-tech products. Now that mobile stations have become more popular, the appearance of the product has become more important as a competitive factor and, therefore, in order to please the consumers, manufacturers are compelled to try and develop various characteristics relating to the outward aspect of the mobile station.

An object of this invention is to provide a mobile station the outer surfaces of which - in addition to the cover part possibly also the battery as well as the antenna surfaces protruding from the cover part - have at least partly a new kind of metallic appearance without, however, degrading in any way the electrical characteristics or performance of the fixed antenna.

The primary characteristics of the invention are presented in the claims attached hereto.

The objects of the invention are achieved by coating the electrically non-conductive cover parts of the mobile station with a suitable metallic-looking but yet electrically non-conductive substance, such as aluminium nitride (AlN). As the metallic look of metals is caused by the free electrons in them, they are also electrically very conductive and thereby unsuitable for the coating of antenna areas. However, certain compounds give a metallic appearance while being non-conductive. The metallic look produced by them is caused by reflection in the material and interference of light associated with it. Such a material reflects light because of its special optical characteristics. According to tests, the resistivity of one such compound, i.e. aluminium nitride, is sufficient so as not to significantly degrade the performance of an antenna when used as a coating on the antenna and/or on cover parts in the immediate vicinity of the antenna. Naturally the coating is substantially thinner than the substrate. The thickness of the coating may be advantageously from 1 to 100 µm.

The aluminium nitride may be attached onto the cover parts of a mobile station using e.g. the PVD (Physical Vapor Deposition) method. In that case it is advantageous to use a PVD technique in which the coating temperature is low, lest the coating unnecessarily heat up the substrate, i.e. the cover part. This way, the cover part may be made of a plastic material, which is the most commonly used material for cover parts of mobile stations. The shade of the metallic luster produced by the aluminium nitride can be easily varied by altering the thickness of the coating so that the effect caused by the interference in the coating on the various wavelengths of reflected light changes. Also, the shade can be slightly altered by changing the color and/or surface roughness of the material of the cover parts of the mobile station. Furthermore, the shade of the coating can be altered using tinted lacquer. Lacquer has the additional advantage that it protects the coating against wear. Other coatings, particularly glass (SiO₂) may be used under the aluminium nitride as a reflective layer or on top of the aluminium nitride as a protective transparent layer.

Applications of the invention are described below in more detail with reference to the accompanying drawing in which
- Fig. 1: shows a front view of a mobile phone according to the invention,
- Fig. 2: shows a front view of an alternative embodiment of the invention with an internal antenna,
- Fig. 3: shows an interchangeable cover intended to be used in mobile phones,
- Fig. 4: shows a rear view of a mobile phone according to the invention, and
- Fig. 5: shows a side view of a mobile phone according to the invention.

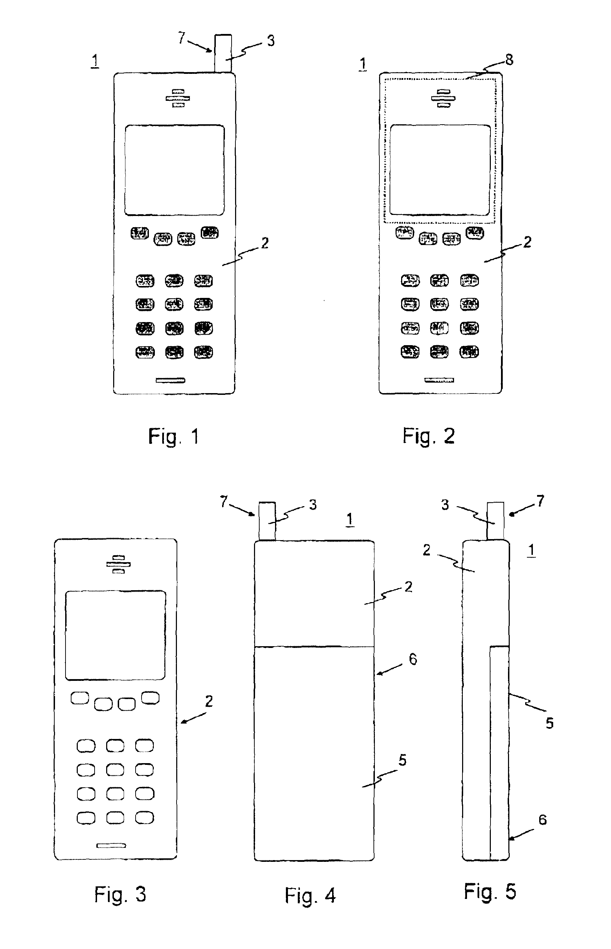

Fig. 1 illustrates a preferred embodiment of the invention in which a plastic or similar electrically non-conductive cover part 2 of a mobile phone 1 (also called a hand-held phone) is coated with electrically non-conductive aluminium nitride thus giving the phone a desired metallic look. Thereby, the surface 3 outside of the cover part 2 of the fixed antenna 7 of the mobile phone 1 may also be coated with said material without degrading the performance of the antenna 7.

Considering that the small size of the mobile phone will be more and more important as a competitive factor, one way of reducing the size is to position the antenna 8 of the mobile phone 1 inside the cover part of the phone, in which case it is a so-called internal antenna. Fig. 2 illustrates such an application. Then it is of utmost importance that when the coating of the cover part 2 is metallic-looking, it is also electrically non-conductive so that the performance of the internal antenna 8 inside the cover part 2 remains good.

Different colors for the outer surfaces of the covers 2 of mobile phones as well as the fact that one is able to change them may also be deemed as important competitive factors. To that end, some mobile phone types have special interchangeable covers 2 (Fig. 3) which can be separately purchased and are easy to attach to the mobile phone. In such a case, where the interchangeable covers 2 are metallic-looking, they also have to be electrically non-conductive so as not to degrade the performance of the antenna.

Separate batteries are generally available for mobile phones, which batteries are usually attached to the rear side of the mobile phone in such a manner that, when installed, the cover part of the battery forms a continuous surface with the cover part of the phone body. If the cover part 2 of the mobile phone 1 is metallic-looking, it is natural that the cover part 5 of the battery 6, which serves as outer surface of the mobile phone, looks similar. Therefore, especially in cases where the mobile phone 1 has an internal antenna, it is important that the cover part 5 of the battery 6, too, is electrically non-conductive so as not to degrade the performance of the antenna.

Fig. 4 shows a mobile phone 1 as seen from the rear, and Fig. 5 shows it as seen from the side. Both figures show a battery 6 attached to the body of the mobile phone 1.

It is also possible to purchase separate antennas 7 for mobile phones, to improve either the outward appearance or the receiving area of the phone. It is then natural that such a separate antenna or at least its surface portion located outside the cover part 2 of the mobile phone is advantageously coated with an electrically non-conductive material even if it looks metallic.

It is obvious that the electrically non-conductive but yet metallic-looking coating may consist of some other substance than aluminium nitride. It is also obvious that such a coating need not cover the whole cover part of the mobile phone but it only needs to cover selected surface portions of the mobile phone or its cover part or of the surfaces of the battery or antenna that complement the cover part of the mobile phone.

It should be noted that in addition to the mobile phone mentioned in the embodiments described above the invention can be applied to all portable apparatus designed for wireless communications, i.e. mobile stations. These include, among others, apparatus intended to communicate not only speech but messages and data as well, including communicators, wireless modems and paging devices.

Moreover, it is obvious that the invention pertains not only to the mobile station and the components associated with it. Indeed, the invention pertains to any structural material the electrically non-conductive, advantageously plastic base part of which is entirely or partly coated with a metallic-looking electrically non-conductive substance, advantageously aluminium nitride. Such a structural element may be used in various radio apparatus in which the operation could suffer from an electrically conductive cover part. In addition, the structural element according to the invention can be used in apparatus in which exposed electrically conductive parts are not allowed for reasons of electrical safety.

## Claims

1. A mobile station (1) with a fixed antenna (7) and a cover part (2) that is electrically non-conductive at least as regards the antenna area, **characterized** in that said electrically non-conductive cover part is entirely or partly coated with a metallic-looking electrically non-conductive substance.

2. A mobile station according to claim 1, **characterized** in that the metallic-looking electrically non-conductive coating on its cover part (2) consists of aluminium nitride (AIN).

3. A mobile station according to claim 1 or 2, **characterized** in that the metallic-looking electrically non-conductive coating on its cover part (2) is produced using the PVD (Physical Vapor Deposition) method.

4. A separate, electrically non-conductive, at least as regards the antenna area, cover part (2) of a mobile station (1) equipped with a fixed antenna (7), **characterized** in that it is entirely or partly coated with a metallic-looking electrically non-conductive substance.

5. A separate mobile station cover according to claim 4, **characterized** in that its metallic-looking electrically non-conductive coating consists of aluminium nitride.

6. A separate mobile station cover according to claim 4 or 5, **characterized** in that its metallic-looking electrically non-conductive coating is produced using the PVD method.

7. A battery (6) for a mobile station (1) equipped with a fixed antenna (7), **characterized** in that the battery's exterior surface (5), which forms an electrically non-conductive cover part (2) in the mobile station (1), is entirely or partly coated with a metallic-looking electrically non-conductive substance.

8. A mobile station battery according to claim 7, **characterized** in that the metallic-looking electrically non-conductive coating on its exterior surface (5) consists of aluminium nitride.

9. A mobile station battery according to claim 7 or 8, **characterized** in that the metallic-looking electrically non-conductive coating on its exterior surface (5) is produced using the PVD method.

10. An antenna (7) attached in a fixed manner to a mobile station, **characterized** in that the antenna's exterior surface (3), which forms an electrically non-conductive cover part in the mobile station (1), is entirely or partly coated with a metallic-looking electrically non-conductive substance.

11. A mobile station antenna according to claim 10, **characterized** in that the metallic-looking electrically non-conductive coating on its exterior surface (3) serving as a cover part consists of aluminium nitride.

12. A mobile station antenna according to claim 10 or 11, **characterized** in that the metallic-looking electrically non-conductive coating on its exterior surface (3) serving as a cover part is produced using the PVD method.

13. A structural material, **characterized** in that its electrically non-conductive base part is entirely or partly coated with a metallic-looking electrically non-conductive substance.

14. A structural material according to claim 13, **characterized** in that its metallic-looking electrically non-conductive coating on the base part consists of aluminium nitride (AlN).
